(19) Europäisches Patentamt / European Patent Office / Office européen des brevets

(11) **EP 3 256 545 B1**

(12) **EUROPEAN PATENT SPECIFICATION**

(45) Date of publication and mention
of the grant of the patent:
**05.05.2021 Bulletin 2021/18**

(21) Application number: **16709585.0**

(22) Date of filing: **10.02.2016**

(51) Int Cl.:
***C09K 19/52*** *(2006.01)*

(86) International application number:
**PCT/IB2016/050697**

(87) International publication number:
**WO 2016/128907 (18.08.2016 Gazette 2016/33)**

(54) **A STIMULI-RESPONSIVE COMPOSITE MATERIAL, RESPECTIVE PRODUCTION PROCESS AND APPLICATION AS A SENSITIVE FILM**

AUF STIMULI REAGIERENDER VERBUNDSTOFF, ENTSPRECHENDES HERSTELLUNGSVERFAHREN UND ANWENDUNG ALS EMPFINDLICHE FOLIE

MATÉRIAU COMPOSITE DE RÉPONSE AUX STIMULI, PROCÉDÉ DE PRODUCTION RESPECTIF ET APPLICATION SOUS LA FORME D'UN FILM SENSIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2015 PT 15108205**

(43) Date of publication of application:
**20.12.2017 Bulletin 2017/51**

(73) Proprietors:
• **Faculdade De Ciências E Tecnologia Da Universidade
Nova de Lisboa
2829-516 Caparica (PT)**
• **Universidade De São Paulo
São Paulo (BR)**

(72) Inventors:
• **AFONSO ROQUE, Ana Cecília
2829-516 Caparica (PT)**
• **HUSSAIN, Abid
2829-516 Caparica (PT)**
• **GRUBER, Jonas
05508-000 São Paulo (BR)**
• **SILVA SEMEANO, Ana Teresa
2829-516 Caparica (PT)**

(74) Representative: **Patentree
Rua de Salazares 842
4149-002 Porto (PT)**

(56) References cited:
**WO-A1-2010/060131 US-A1- 2003 194 753
US-A1- 2004 169 158**

• **MASAFUMI YOSHIO ET AL: "SELF-ASSEMBLY OF AN IONIC LIQUID AND A HYDROXYL-TERMINATED LIQUID CRYSTAL: ANISOTROPIC ION CONDUCTION IN LAYERED NANOSTRUCTURES", MOLECULAR CRYSTALS AND LIQUID CRYSTALS, vol. 413, no. 1, 1 January 2004 (2004-01-01), pages 99-108, XP055277629, UK ISSN: 1542-1406, DOI: 10.1080/15421400490432632**
• **WEI ET AL: "Applications of ionic liquids in electrochemical sensors", ANALYTICA CHIMICA ACTA, ELSEVIER, AMSTERDAM, NL, vol. 607, no. 2, 23 December 2007 (2007-12-23), pages 126-135, XP022413502, ISSN: 0003-2670, DOI: 10.1016/J.ACA.2007.12.011**
• **SIVAKUMAR S ET AL: "Liquid crystal emulsions as the basis of biological sensors for the optical detection of bacteria and viruses", ADVANCED FUNCTIONAL MATERIALS 20090724 WILEY-VCH VERLAG DEU,, vol. 19, no. 14, 24 July 2009 (2009-07-24), pages 2260-2265, XP002596167,**
• **JUNICHI SATO ET AL: "Chiroptical properties of cholesteric liquid crystals of chitosan phenylcarbamate in ionic liquids", POLYMER JOURNAL, vol. 46, no. 9, 21 May 2014 (2014-05-21), pages 559-567, XP55502491,**

## Description

### Technical Field

The present request discloses a stimuli-responsive composite material, respective production process and application as a sensitive film.

### Prior Art

Liquid crystals can serve as the sensing elements in diagnostic devices given their fast response to an external stimulus (e.g. electromagnetic field) or in the presence of an analyte, as reviewed previously by [1]. In addition, the inherent alignment of a mesophase can be disrupted by the introduction of biological species, as reported in the past using thermotropic liquid crystals immobilized or self-assembled onto treated or chemically modified microscope slide surfaces [2,3] or free lyotropic liquid crystals aligned in solution [4,5].

Most devices containing sensing elements composed by liquid crystals focus on the detection of biological species because the presence of biological species causes changes in the orientational ordering of a liquid crystal, which can be monitored by polarized optical microscopy, through the difference of intensity of the transmitted light. Since liquid crystals are immiscible with water, the interactions between analytes in the solution and the liquid crystal can be studied at the liquid crystal/aqueous interface. Therefore, we have rationalized that emulsions formed from liquid crystals represent viable candidates for the creation of liquid crystal-based sensors, particularly suited for the analysis of aqueous biological species. On the other hand, emulsions provide a larger contact interfacial area than liquid crystals disposed in planar contact surfaces. Moreover, the three-dimensionality of the liquid crystal droplets is better suited to detect interfacial events [6]. However, liquid crystal droplets in emulsions are mobile, which hampers their observation under polarized light microscopy. Therefore, for proper observation, the droplets need to be confined or to be smaller [7]. In this context, liquid crystal micelles have been produced by vortexing or sonication using surfactants and amphiphile molecules, or by templating. The latter includes the encapsulation of liquid crystal by a Layer-by-Layer (LbL) technique where polyelectrolyte multi-layers (PEMs) of poly(styrene sulfonate)/poly-(allylamine hydrochloride) are built on liquid crystal oil-in-water emulsions [6,8]. LbL technique was also used to produce a range of liquid crystal emulsions with a predetermined size and surface chemistry. In this case, the method of liquid crystal emulsion preparation involved templating PEM capsules formed by the LbL adsorption of polyelectrolytes on sacrificial silica particles [9,10]. These liquid crystal emulsions consisting of micrometer-sized droplets were able to detect and distinguish between different Gram+ and Gram- bacteria, as well as enveloped and non-enveloped viruses, on the basis of 4-pentyl-4'-cyanobiphenyl (5CB) transition (e.g. from bipolar to radial configuration). The transitions of 5CB orientational order were associated with the transfer of lipids from the biological species to the interfaces of the liquid crystal droplets. In this case, the liquid crystal droplets were mobile, which hampered their observation by microscopy.

Other authors employed liquid crystal dots on microfluidic channels which functioned as microscopic protein sensors. Inkjet printing techniques were employed to print liquid crystal dots directly on a hydrophobic surface in such a way that the liquid crystal dots were embedded inside microfluidic channels [12]. Other authors used surfactant-stabilized 5CB droplets produced by sonication for the detection of lithocholic acid in solution at the micromolar level. The tested surfactants were sodium alkyl sulfate, alkyl trimethylammonium bromide and 1,2-Dioleoyl-sn-glycero-3-phosphoethanolamine-N-(7-nitro-2-1,3-benzoxadiazol-4-yl) [12]. According to this study, the surfactant adsorbed at the 5CB/water interface was replaced by lithocholic acid, triggering a radial-to-bipolar configuration transition of the 5CB in the droplets, and micromolar levels of lithocholic acid in aqueous solution could be detected by observing the lithocholic acid-triggered transition with a polarized optical microscope.

Recently, surface-oriented liquid crystals and liquid crystal emulsions/liquid crystal droplets have also been employed for the detection of volatile organic compounds. One example includes the development of a liquid crystal-based optical sensor for the detection of vaporous butylamine in air where 5CB was doped with lauric aldehyde [13]. The proposed sensor shows fast and distinct bright-to-dark optical response to primary amines as butylamine vapor (within 2 min after it is exposed to 10 ppmv of butylamine) and also to secondary amines, but with a higher detection limit of 200 ppmv. This optical response is attributed to an orientational transition of liquid crystal triggered by a reaction between the dopant and the amines.

This liquid crystal sensor also exhibits reversibility after the sensor is exposed to open air. A gas detector chamber was built where lauric aldehyde-doped 5CB is dispensed in a copper grid supported on a clean glass slide, and the 25 ml chamber possesses an inlet and outlet for vapors plus a glass window for visualization on the optical polarized microscope.

Recently, a sensor for detection of nitric oxide (NO) was presented, where a gold-coated surface was employed as the specific constituent to detect NO. The liquid crystals were deposited onto this surface in their free form [14]. The same work showed that humidity had a minimal effect on the sensors' response and that the sensors remain functionally stable for six months when are stored under an inert atmosphere.

Other authors proposed a method for gas detection, specifically ethanol, using liquid crystals deposited in a planar optical waveguide [15]. The presented method detects differences in the director of liquid crystal molecules and the refractive index of the sensitive film. The structure of the sensor comprises three layers: a layer of benzocyclobutene, an epoxy substrate, and a copper perchlorate doped liquid crystal cladding. Copper perchlorate is sensitive to ethanol and thus worked as a recognition agent [15]. In another format, a sensor based on molecularly imprinted polymers (MIP) with cholesteric liquid crystals for the detection of organic solvent vapors of polar and non-polar substances was described. In this case, a mixture of styrene monomers, together with 30% by weight of divinylbenzene as a crosslinking agent was polymerized in an 80-fold excess of solvent. Cholesteric liquid crystals were added to the above mixture in a small fraction for imprinting. As the polymerization was photoinduced the coated MIP layers were exposed to ultraviolet light (UV) at a wavelength of 365 nm for 10 minutes [16]. These MIPs were exposed to increasing concentrations of vapors and a shift of the absorption band towards lower wavelengths was observed. The MIPs were also placed on structures used in quartz crystal microbalance (QCM) in order to study the incorporation of analytes in them through their mass increase [16].

Document no. US20120288951 was also published, which discloses a method where liquid crystals are used as sensory elements. In these systems, the liquid crystals possess a reactive moiety involved in the analyte detection, and the transition of the liquid crystal orientation is measured [17]. Also in patent document no. US7666661 are presented general substrates, devices and methods for quantitative assays of liquid crystals, wherein the devices are defined as being constituted by a surface with a recognition moiety and a mesogenic layer oriented to the surface [18].

In another publication [19], a gas-sensitive sensor for the detection of dimethylphosphonate (DMMP) was proposed consisting of polymer-dispersed liquid crystals (PDLC). The sensor element comprises a PDLC doped with carbon nanotubes (CNT-PDLC), and a pair of planar interdigitated electrodes. The concentration of DMMP exposed to the CNT-PDLC material is detectable by measuring the change in conductivity of the material. Compared with liquid crystal based conventional sensors, the proposed PDLC device is robust against mechanical shocks. The sensor response is linear for gas concentrations of 5 to 250 ppm, and the response time is about 125 s [19]. In this case, the liquid crystal E7 droplets strongly adsorbed onto carbon nanotubes are dispersed randomly in the acrylate polymer. After exposure to the analyte, the resistance of the polymer increases due to re-structuring of the conductive network of the carbon nanotubes.

In the field of gas sensors which are not based on liquid crystals, the most studied and commercially available devices use semiconductor metal oxides (MOS), metal oxide semiconductor based field effect transistors (MOSFET), surface acoustic wave (SAW), and conductive polymers (CP). The disadvantages of these sensors include high operating temperature (150 to 500° C), high energy consumption, sensitivity to moisture and temperature, the need for sophisticated electronic equipment for generating a signal, and a complex process for the preparation of the sensorial surface. Recently, it was demonstrated that materials resulting from chemical crossing of gelatin and organic salts can be applied as electrically conductive materials, such as reported in document PT103765 [20] and used as gas sensors [21].

Document US 2003/194753 discloses a method of forming a liquid crystal device involving the following steps: contacting an aqueous solution comprising a surfactant and a receptor molecule with a top surface of a liquid crystal. The liquid crystal is in a holding compartment of a substrate, and the receptor molecule is adsorbed on the top surface of the liquid crystal forming an interface between the liquid crystal and the aqueous solution. The document further discloses a method of detecting a compound in a flowing stream involving passing an aqueous solution over a top surface of a liquid crystal in a holding compartment of a substrate.

Document US 2004/169158 discloses a liquid-crystalline ionic conductor and the method for producing it. The liquid-crystalline ionic conductor is obtained by mixing an organic molten salt with a liquid-crystalline organic molecule or a liquid-crystalline inorganic molecule, which comprises a moiety miscible to the organic molten salt and a moiety that shows liquid-crystalline orientation, thereby forming a liquid-crystalline ionic conductor, wherein the organic molten salt is assembled to the liquid-crystalline molecule.

Masafumi Yoshio et al "Self-assembly of an ionic liquid and a hydroxyl-terminated liquid crystal: Anisotropic ion conduction in layered nanostructures" discloses anisotropic ion-conductive materials prepared by self-assembly of a conventional ionic liquid and a hydroxyl-terminated liquid crystal. These assemblies form phase-segregated layered structures on the nanometer scale.

Document WO 2010/060131 discloses a material suitable for use as a contrast agent for diagnostic imaging comprising (i) nanoparticles, (ii) amphiphile self-assembled into an ordered lyotropic liquid crystal phase, (iii) a liquid solvent in which the lyotropic liquid crystal phase is dispersed as nanodroplets, and (iv) a stabilizer.

Wei et al "Applications of ionic liquids in electrochemical sensors" describes the properties of ionic liquids (ILs), their general applications based on these properties and, development of novel ion selective sensors, gas sensors and biosensors based on ILs. IL gels were found to have good biocompatibility with enzymes, proteins and even living cells. Wei et al also describes the application of ILs in electroanalytical sensors.

Sivakumar s et al "Liquid crystal emulsions as the basis of biological sensors for the optical detection of bacteria and viruses" discloses a sensing method based on monodisperse liquid crystal (LC) emulsion droplets which detects and distinguishes between different types of bacteria (Gram +ve and -ve) and viruses (enveloped and non - enveloped). LCs of 4 - cyano - 4' - pentylbiphenyl transition from a bipolar to radial configuration when in contact with Gram -ve bacteria (E. coli) and lipid - enveloped viruses (A/NWS/Tokyo/67).

Junichi Sato et al "Chiroptical properties of cholesteric liquid crystals of chitosan phenylcarbamate in ionic liquids" discloses the lyotropic liquid crystallinity of Chitosan phenylcarbamate (CtsPC) synthesized with different degrees of substitution (DS) ranging from 2.3 to 3.5. 1-Ethyl-3-methylimidazolium dicyanamide ([C2Mim][N(CN)2]) was found to be a novel solvent for CtsPC, and the concentrated lyotropic system formed a cholesteric liquid-crystalline phase and mostly exhibited vivid colorations owing to selective reflection of visible light.

## Summary

The present application describes a sensitive composite material formulation, comprising:

a) at least one liquid crystal consisting of at least one mesogen, wherein the liquid crystal is 4-pentyl-4'-cyanobiphenyl;
b) at least one ionic liquid consisting of at least one organic salt having the composition $X^+$ and $Y^-$ where $X^+$ represents the cation and $Y^-$ represents the anion of the salt, wherein the ionic liquid is [BMIM][Cl], [BMIM][DCA] or [BMIM][FeCl4];
c) at least one polymer , wherein the polymer is dextran or gelatin;
d) at least one solvent, such as water provided that when the polymer is dextran the ionic liquid is [BMIM] [**Cl**].

The choice of solvent will depend on the physicochemical properties of the other components. The solvent may be composed in any proportion of one or more polar, apolar, protic or aprotic solvent(s), ionically charged or uncharged, including but not limited to water, aqueous solvents and organic solvents.

In one embodiment, the formulation of the composite material can further comprise at least one stabilising agent, such as sorbitol.

In another embodiment, the formulation of the composite material comprises at least one electrolyte.

In yet another embodiment, the formulation of the composite material may comprise at least one molecular recognition agent such as peptides, antibodies and enzymes.

In yet another embodiment, the formulation of the composite material comprises materials including carbon nanotubes, gold nanoparticles, magnetic nanoparticles, among others.

In another embodiment, the formulation of the composite material is comprised of active ingredients, in particular substances having a pharmacological effect (whether therapeutic or diagnostic)

The sensitive film is fabricated using the following protocol and reagent composition:

a) The formulation of a composite material comprises at least one liquid crystal, at least one ionic liquid, at least one polymer or molecule with self-assembly properties or their mixture and of at least one solvent, such as water, wherein the formulation is prepared by a procedure which includes but is not limited to magnetic stirring techniques, manual agitation, vortex mixing or application of ultrasound;
b) Shaping the aforementioned formulation into layer format (s) such as, but not limited to, transparent thin films of varying dimensionality (thickness, length, width etc.). Such films may be deposited onto rigid or flexible, treated or untreated, optically transparent surfaces which themselves do not exhibit any intrinsic anisotropy. Film formats may be deposited by employing scattering techniques, which include, but are not limited to the use of utensils such as nozzles, spatulas, glass rods or through mechanical or automatic propulsion technique, wherein the rigid or flexible surface comprises at least one structure, such as mesh, channel, plurality of columns, a matrix of test area, or a combination thereof.

The described composite material, and respective production method enable the application of the material as sensitive film(s) that respond to external stimuli such as temperature changes, pressure changes, changes of concentration of compounds such as patterns of analytes and analytes, organic compounds, inorganic compounds, biomolecules, biomarkers, microorganisms, viruses, cells, organelles, and particles in gaseous, liquid or solid states by observing or measuring changes in the properties of the composite material, such as but not limited to, changes to the optical, electrical and/or opto-electrical properties.

This composite material, and respective production method, may also be used for encapsulation of active ingredients, encapsulating molecules and particles such as, but not limited to, biomolecules and cells; or as material for medical devices for diagnosis and therapy, materials and devices for the pharmaceutical and cosmetic industries, or the development of materials and devices for construction and automotive industry, materials for catalysis for chemical and biochemical reactions, materials for separation of compounds, conductive and semi-conductive materials and electrochemical cells or parts thereof.

**General description**

This document describes a composite material that may be a gel or polymer matrix, which can be used as a sensing element for the detection and quantification of a variety of analytes. The detection of analytes in samples can be made through (i) changes in optical properties of the sensitive film, (ii) electrical conductivity changes or (iii) changes in optical properties and electrical conductivity simultaneously.

The intrinsic properties of this material and its fast and reversible responses in the presence of volatile compounds allow its utilization as sensitive film able to detect analytes through different transduction principles (optical, electrical and opto-electrical). Several combinations of these sensitive films can be arranged due to the wide range of components available for the films, allowing the optimization of response patterns for a variety of applications.

The major components of the present technology include : Composite materials whose essential components are: (i) at least one liquid crystal or mixture thereof, (ii) at least one ionic liquid, an organic salt of composition $X^+$ and $Y^-$ wherein $X^+$ represents the cation of the salt and $Y^-$ represents the anion of the salt, or surfactant, (iii) selection of polymers of natural or synthetic origin preferably used singly or as a mixture of at least two components; self-assembling molecules or molecules with properties that induce the formation of gels and composites or their mixture between said polymers of natural or synthetic origin and self-assembling molecules (iv) a solvent, such as water. Optionally, other components may be included such as (v) a stabilizing agent, such as sorbitol; (vi) an electrolyte that can be dispensed if the sensitive film is used to obtain exclusively optical response or in cases where the ionic liquid(s) or surfactant(s) are also a conductive agent.

From this mixture, the composite material can be molded into the layer format (s), such as thin films or other structures with different 1D, 2D and 3D geometries (eg., fibers, particles), such that liquid crystal micelles are dispersed in controlled size and distribution pattern while remaining immobilized within the composite material.

The mixture may be formed by scattering the above formulation on a hard, ideally clear, untreated surface such as a clean glass slide, free of intrinsic anisotropy, without any additional pretreatment. This scattering may occur through the use of different scattering techniques, including, but not limited to the use of utensils such as nozzles, clamps, spatulas, glass rods or by means of mechanical propulsion technique or automatic techniques (e.g. "spin coating").

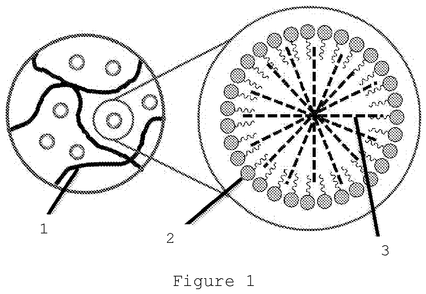

Depending on the composition of the mixture, after the deposition onto a surface, the resultant structure maybe a transparent film, whether permeable, flexible or semi-rigid, as configured in Figure 1. When observed through crossed polarizers under an optical polarizing microscope, the liquid crystal contained within the body of the film may be distributed as discrete micelles, exhibiting a clearly defined radial or bipolar configuration, depending on the composition and molding of the composite material. The micelles containing liquid crystal molecules are firmly encapsulated within the network of the film constituents, but nevertheless remain sensitive to external stimuli such as chemical vapor of a solvent, or any other analyte, temperature or pressure.

Upon contact with an analyte, the orderly arrangement of the liquid crystal micelles is disrupted and changes in anisotropic properties of the micelles can be observed by a polarized light optical microscopy system or other transduction means.

Changes in the optical and opto-electrical properties of the sensitive film occur in response to applied external stimuli such as, but not limited to, temperature changes, pressure changes, changes in electromagnetic field, the presence of volatile compounds, micro-organisms, particles, metabolites among others.

The formulation of the composite material comprising liquid crystals(s) and ionic liquid(s), as well as the method to formulate and cast a sensitive film using this formulation described herein have the following unique characteristics:

(a) The analyte detection is not dependent on changes in the net radial crystal phase transition for bipolar (or vice versa) for detection.

(b) The analyte detection does not require labeling, labeling or possession of any specific molecular recognition interface, to enable or facilitate the interaction of the analyte.

(c) Regarding exposure times, response times and recovery times, the sensitive films produced by the described method operate on shorter time scales, in the order of seconds, allowing to perform measurements in real time.

(d) Sensitive films produced by this method contain the liquid crystal micelles fixed within the polymer matrix, which facilitates the observation of the events through polarized light microscopy or by any other transduction method whether optical, electrical and/or opto-electrical.

(e) The optical, electrical and opto-electrical responses of these films in the presence of analytes in samples are reproducible and reversible, thereby making it possible to re-use the film a multiple number of times without adverse effect.

(f) The sensitive film produced by the described method does not require pre-treatment of the transparent surface on which the film is molded.

(g) This technology permits an increase in selectivity of analyte detection and reduces the number of sensors required for detecting and / or quantifying a sample using the principles of optical detection compared to solely electrical transduction principles. This was observed in a study where four films of gelatin and ionic liquid (without a liquid crystal) were able to distinguish eight solvents [21]. In Example 4 presented here, three polymer matrices or gels of different compositions distinguished eleven different solvents using only an optical transduction. Principle.

(h) The sensitive film produced by this method can be used in sensors to provide a selective or semi-selective detection, or a combination of semi-selective responses, without limiting its potential and detection versatility, resulting in a wide range of potential applications.

(i) the ease of fabrication of the sensitive films, the numerous possible variations in its composition and the possibility of combining sensitive films with different formulations, confer sensitivity and selectivity to the sensory system.

(j) The sensitive films have great stability and can be stored at least for 18 months at ambient conditions without adverse effect to composition, physical, chemical or optical properties.

(k) The sensitive films are not influenced by the presence of moisture in the samples that are going to be analyzed.

(l) The fact that it is possible to use the optical measurement alone facilitates the use of the sensitive films in optical devices for detection of analytes in explosive or flammable environments, as shown in Example 6.

(m) The composite materials, as well as the sensitive films and optical and hybrid devices are very low cost in production and operation.

(n) Most of the materials that make up the sensitive films have reduced environmental impact.

(o) The production of films is scalable and compatible with mass production.

Composite materials and sensitive film described herein may have a wide range of applications, such as:

1. Manufacturing Industry (mainly in quality control, detection of hazardous agents), food industry, chemical products, refineries and petrochemical plants, pharmaceutical and biopharmaceutical industry, biotechnology, timber industry, among others.

2. Security - airports, ports, military and national security.

3. Environment - detection of risks and pollution, waste control in water treatment plants and reservoirs as well as in rivers and lakes.

4. Rapid diagnostic/disease management devices for hospital and home use.

5. Scientific research - Distinction of materials, botanical and ecological studies, and also analytical methods.

A device capable of obtaining optical or opto-electrical signals was built in order to make measurements using the sensitive film described herein. To obtain the optical signal, the device consists of an optical sensor comprised of light emitter/photodetector pairs, such as LED/LDR (light emitting diode/light dependent resistor) or any other source of white or colored light, which enables to obtain the quantitative data generated by the sensitive films acting as sensory interfaces. The optical sensor device comprises at least one source of mono- or polychromatic light, aligned with an equal number of photodetectors and may be a phototransistor, a photodiode, an LDR, among others, which convert light intensity into a measurable electrical signal. The optical sensors were fixed in the light paths between two crossed polarizing films, allowing the transduction system to measure the light intensity that passes through the sensitive composites and reaches the photodetector during the analyses.

To acquire an opto-electrical signal, a device was built which allows simultaneous acquisition of electrical and optical signals generated by the sensitive films when exposed to samples of different analytes, thereby improving the reliability and accuracy of the sensor. The optical measurements are obtained as described for the optical sensor. The electrical measurements are obtained by depositing the films onto interdigitated electrodes deposited on transparent substrates, forming chemiresisitive sensors, to which an alternating voltage is applied, this way generating a proportional electrical current in the deposited films. This apparatus permits to make electrical measurements, such as admittance, impedance, capacitance, etc., during the analyses.

This device is useful for rapid real-time detection of high valuable analytes in the gaseous or vapor phase, including, but not limited to, volatile compounds. It can be used in field work for environmental monitoring, safety, laboratory analyses, food and hygiene industries, biopharmaceutical, biotechnology and pharmaceuticals, as well as in medical devices.

**Brief Description of the Figures**

For an easier understanding of the technique, figures are attached. They represent embodiments but, however, are not intended to limit the subject of this application.

**Figure 1** illustrates a schematic representation of the structure of the composite material comprising the following elements:

1- polymer chains;
2- ionic liquid;
3- aligned liquid crystals.

**Figure 2** illustrates a schematic representation of a measuring device (4) of volatile compounds using the optical or opto-electrical sensors, monitored by an electrical signal, being the transduction unit of the optical and optoelectronic device comprised by: hybrid sensors (transparent substrate with or without interdigitated electrodes) (5), photodetectors (6), photoemitters (7) polarizing films (8) and printed circuit board (9).

**Figure 3** illustrates the pneumatic system, composed of computer-controlled solenoid valves, constructed with the purpose of transporting volatiles from the sample to the sensors for analysis. It is comprised by the following parts:

10- Sample compartment;
11- Solenoid valves;
12- Air pump;
13- Air;
14- Sensors compartment;
15- Flow meter;
16- Admittance Meter with A/D converter;
17- Computer;
18- Output of the measuring device (4).

**Figure 4** shows conductance measurements as a function of the light intensity passing through a reference comparative example of a sensitive film composed by gelatin, dextran and [BMIM][DCA], during its exposure to different solvents:
Toluene (19), methanol (20), hexane (21), ethanol (22), acetone (23), chloroform (24).

**Figure 5** illustrates the conductance due to changes in the anisotropic properties of three optical sensors with different compositions: 25) gelatin, dextran and [BMIM] [DCA] (reference comparative example) ; 26) gelatin, sorbitol and [BMIM][DCA]; 27) gelatin, dextran and [ALOCIM] [Cl] (reference comparative example)

- In the figure, 10 cycles of exposure/recovery are shown, while these sensors are exposed to ethyl acetate vapors for 6 sec, followed by pure air for 54 s.

**Figure 6** illustrates a plot of the principal component analysis (PCA) of the response of an opto-electrical nose - formed by three optical sensors: (25) gelatin, dextran and [BMIM] [DCA] (reference comparative example) ; (26) gelatin, sorbitol and [BMIM][DCA]; (27) gelatin, dextran and [ALOCIM] [Cl] (reference comparative example)

- in the presence of eleven different solvents: ethyl acetate (28), ethanol (29), dichloromethane (30), dioxane (31), diethyl ether (32), heptane (33), hexane (34), methanol (35), carbon tetrachloride (36), toluene (37), xylene (38).

**Figure 7** illustrates the electrical and optical response obtained by the hybrid sensor (containing 5CB, [BMIM][Cl] and dextran) when exposed to acetone.

**Figure 8** illustrates the conductance obtained over time in the monitoring of tilapia fish quality using an optical gas sensor based on gelatin, 5CB and [BMIM][DCA], as an alternative and/or complement to microbiological bench test, conventionally performed to ensure food quality control of perishable products.

**Figure 9** illustrates the relative response of the optical sensor, consisting of gelatin, 5CB and [BMIM][DCA], during a 12h Tilapia fish monitoring.

**Figure 10** illustrates the electrical and optical responses of the hybrid sensor, whose composition includes 5CB and [BMIM][FeCl$_4$] in a gelatin polymer, simultaneously measured over time upon successive exposure to samples of petrol containing different amounts of ethanol.

**Figure 11** illustrates the admittance over time obtained from the electrical component of the sensor, as the hybrid sensor (employing 5CB and [BMIM][FeCl$_4$] in a gelatin matrix) was exposed to petrol samples with different ethanol contents (% v/v):

38 - 20% ethanol;
39 - 40% ethanol;
40 - 60% ethanol;
41 - 80% ethanol;

42 - 100% ethanol.

**Figure 12** illustrates the conductance over time obtained by the optical component of the hybrid sensor (employing 5CB and [BMIM] [FeCl$_4$] in a gelatin matrix) when it was exposed to samples of petrol with different ethanol contents (% v / volume), respectively:

38 - 20% ethanol;
39 - 40% ethanol;
40 - 60% ethanol;
41 - 80% ethanol;
42 - 100% ethanol.

**Figure 13** illustrates the three dimensional graphical representation of the electrical and optical hybrid sensor responses (employing 5CB and [BMIM][FeCl4] in a gelatin matrix) vs. ethanol content:

38 - 20% ethanol;
39 - 40% ethanol;
40 - 60% ethanol;
41 - 80% ethanol;
42 - 100% ethanol.

## Description of the embodiments

The invention will now be described using different embodiments of the same invention, which should not limit the scope of protection of this application.

## Formulation of the composite material - General Procedure

The formulation of the composite material may be performed under agitation or sonication and may require temperature control. The order of addition of the components of the composite material as well as the ratios between the different components of the mixture may be controlled to obtain the desired formulation. The mass ratio of each component, defined by weight% component / total mass of the mixture may range being 1 to 90% of liquid crystal, 1 and 90% for the ionic liquid, 0.1 to 90% for the polymer or molecule with self-assembling properties and 1 to 90% of solvent.

## Preparation of the sensitive film - General Procedure.

Once the mixture is considered ready, a pre-determined portion is pipetted immediately and deposited on a clean, dust-free microscope slide (without any additional pretreatment). A clean smooth glass rod is used to obtain a thin film on the glass slide. The film is allowed to cool to room temperature and then examined under polarized light microscopy. The films may also be prepared through the use of mechanical or automatic propulsion technique - "spin coating", which consists of depositing a known volume of polymer solution on the substrate secured to a turntable, which is programmed to rotate at a controlled speed, for a certain time and at controlled temperature, or by any other process which enables the formation of sensitive films using the composite material. It is also possible to shape the composite material to other geometries and different formats.

Depending on the composition, the formulation after deposition on the surface, can give a transparent, permeable, flexible or semi-rigid film, as illustrated in Figure 1. When observed through crossed polarizers under an optical polarizing microscope, the uniformly distributed liquid crystal micelles are visible and show a radial configuration. Hereinafter, this process is described in greater detail and specifically with reference to examples. However, the examples should not limit the present technology.

## EXAMPLE 1 - Preparation of polymer matrix

The reaction for forming the composite material takes place under stirring and controlled temperature of between 25 and 40°C. In one embodiment, the ionic liquid, or a mixture of ionic liquids (50 µl) is added to a container containing a magnetic stir bar, and stirred for 15 minutes. A liquid crystal sample or a mixture thereof (10 µl) is added to the vessel and stirring is continued for another 10 minutes. The suitable polymer, or a mixture, (50 mg) is then added. After 10 more minutes of stirring, distilled water (50 µl) is pipetted to the mixture and the entire formulation is stirred and observed until an opaque viscous mass, which can take between 10 to 20 minutes depending on the constituents of the mixture.

**EXAMPLE 2** - **Preparation of the polymeric matrix with stabilizer**

Where optionally add additional components for structural and organizational improvement of composite material such as sorbitol, mannose, sucrose, and other mono-, oligo- or polysaccharides, used alone or in a mixture, a sample following procedure is as follows: It is used a container, preferably of glass, for example for up to 5 ml, containing a small magnetic bar to permit good agitation of the components. The ionic liquid, or a mixture of ionic liquids (50 $\mu$l) is added to the flask and stirred for 15 min. A liquid crystal sample or a mixture thereof (10 $\mu$l) is added to the vessel and stirring is continued for another 10 min. The suitable polymer (or a mixture) (25 mg) is added along with the structural improvement agent such as sorbitol (25 mg). After another 10 min of stirring, distilled water (50 $\mu$l) is pipetted to the mixture and the entire formulation is stirred and observed until an opaque viscous mass, which can take between 10 to 20 minutes depending on the constituents of the mixture.

**EXAMPLE 3** - **Application of the sensitive film**

Micelles containing liquid crystal molecules are firmly encapsulated in the polymer network of the film, but nevertheless remain sensitive to external stimuli such as chemical vapor of a solvent, or any other analyte. Upon contact with an analyte, the orderly arrangement of the liquid crystal micelles is disrupted leading to isotropy, which can be observed through an optical microscope system using polarized light. This change is seen as a complete disappearance of the micelles and is recorded in real time. The removal of vapor causes 5CB to reorganize into micelles that have the same initial configuration, size and distribution within the same field of view. This process can be repeated several times without detrimental change to the micelles or the entire film.

The time required for the liquid crystal to re-align to the initial observed configuration is directly correlated with the identity of the solvent. The optical change provides a qualitative measure of the external stimulus.

Vapors of pure substances solvents such as acetone, n-hexane, chloroform, toluene, methanol, ethanol were placed in contact with sensitive films deposited on glass, using water as control. The apparatus consisted of an airtight container of solvent, namely one beaker covered with a rubber septum, containing the test solvent. The septum was pierced with a needle affixed to a plastic syringe. The needle falls below the level of the solvent. The tip was used to drill an exit point through the septum. A thin silicon hose was affixed to the top of the tip and served as the vapor inlet. The input led to a purpose-built glass chamber capable of housing the sensitive film. The sensitive film was placed face down on a raised platform to allow the vapor from the inlet to come into contact with the sensitive film. After each test, any residual vapor was expelled with a purging syringe connected to a venting conduit of atmospheric air. The purging syringe was also used to re-introduce the ambient air into the chamber.

**EXAMPLE 4** - **Application of sensitive film**

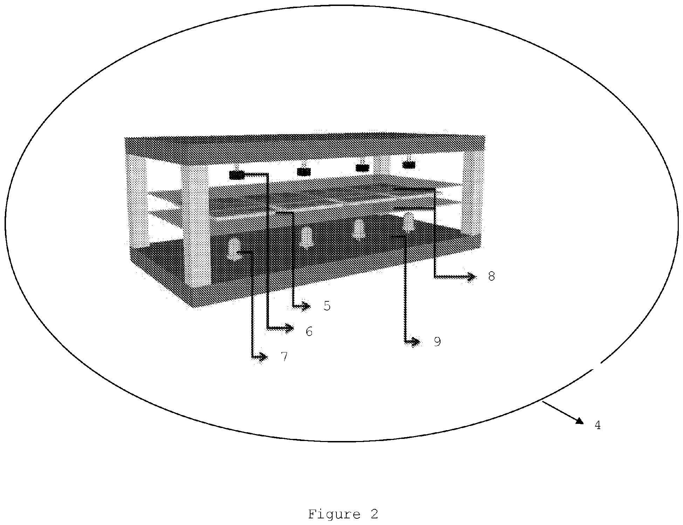

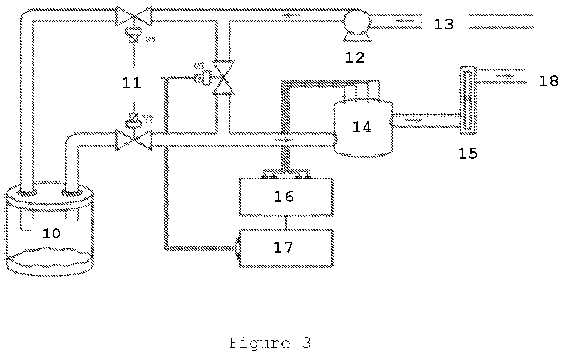

Sensitive films containing encapsulated liquid crystals were exposed to selected volatile organic compounds vapors. The device consists of a light source and a light detector, a sensitive film deposited on a glass slide forming a sensor and two crossed polarizing films, between which the sensitive film is positioned, arranged, for example, as shown in Figure 2. The light detector converts the light intensity which is perceived in a proportional electrical signal. An analog to digital converter makes 20 readings per second, and transmits the data to a computer. The computer controls a pneumatic system, as shown in Figure 3, which feeds the sensor with a stream of dry air which can be pure, called recovery time, or be saturated with a particular volatile organic compound (VOC), called exposure period. During the recovery period, valve V3 is open while V1 and V2 are closed so that the air from the air pump flows directly to the sensor chamber and passes through a flow meter before leaving the system. To expose the sensors to the volatiles from the sample, V3 is closed and V1 and V2 are open, allowing air to reach the sample chamber dragging with it the saturated air with volatiles of the sample to the sensor chamber. The sensors are connected to an acquisition board that sends a digital signal to the computer.

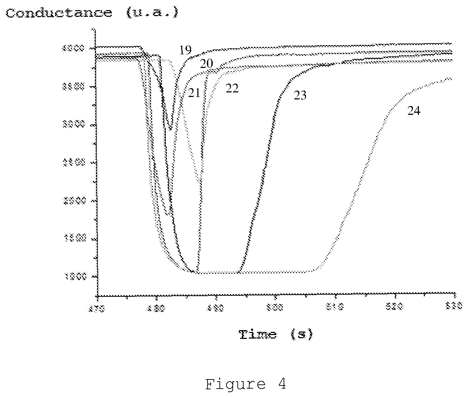

In the tests, the sensor has been exposed to air saturated with VOCs for 5s followed by 55s of recovery with pure air vent. Exposure/recovery cycles were repeated 10 times for each tested sample. With crossed polarizers, micelles of 5CB are visible and therefore, part of the light (base value) is able to pass through the sensory film and reaches the photodetector. The photodetector converts the light signal into a measurable output signal, in this example, the conductance. In contact with VOCs, the order of liquid crystals within the micelles is disrupted, thereby preventing light from passing through to the photodetector element. Removal of the VOC allows the liquid crystals to re-organize back into the familiar micelle pattern exhibited before the exposure, hence the light detection levels return to the base value. The power disruption/reorganization of liquid crystals and respective sensitive films as well as the kinetics of the phenomenon depends on the nature of the analyte, which in this case are the volatile solvent molecules interacting with the sensor, as shown in Figure 4.

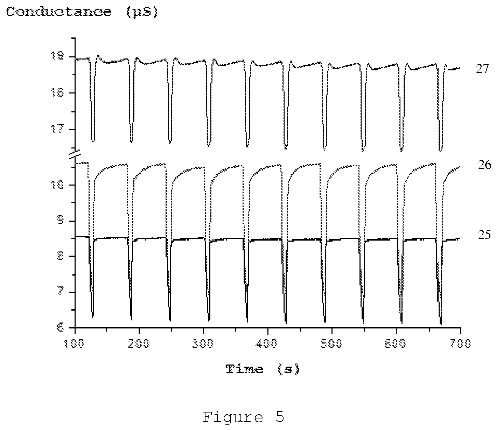

Three films made up of different compositions, were exposed to several solvents: ethyl acetate, ethanol, dichloromethane, dioxane, diethyl ether, heptane, hexane, methanol, carbon tetrachloride, toluene and xylene. After repeated cycles of exposure and recovery, the conductances, which are proportional to the light intensities reaching the three different sensors, were plotted against time for each solvent. As an example, the response obtained for ethyl acetate is shown in Figure 5. The sensors were exposed to the headspace of the solvents for 6s followed by a recovery period for 54s, in which atmospheric air was used to remove the volatiles from the sensors, restoring them back to their original state. The samples were preheated for 10 min and thermostated to 36°C. Twelve consecutive exposures were performed with a gas flow of 1.7 L/min. In Figure 5, the observed decrease in conductance is due to the decrease in light intensity that can pass through the two crossed polarizers when the disorder in the arrangement of liquid crystals on the sensor (caused by volatile solvent) restricts the capacity of these molecular structures to rotate the axis of plane of polarized light. Thus, the change in conductance is intimately related to the interaction between the volatile compound from the solvent and the liquid crystal micelles organized through the intermediary of ionic liquid(s). Depending on the solvent and the composition of the sensitive film of the optical sensor, the micelles disruption/reorganization kinetics changes, which allows to obtain a different response pattern for each volatile analyte, thereby defining their 'fingerprint'.

Relative response (Ra) values, defined by Equation 1, where G1 is the minimum and G2 is the maximum conductance, were calculated using data from the optical and opto-electrical sensors.

$$\mathrm{Ra} = \frac{G_2 - G_1}{G1} \qquad\qquad \texttt{Equation 1}$$

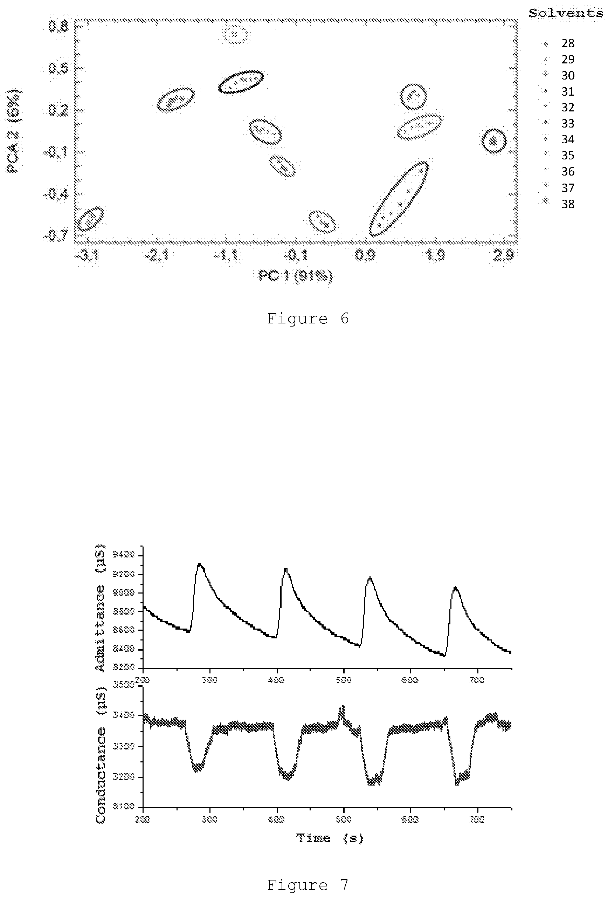

Thus, as a proof of concept in tests with solvents, a set of Ra values was used as input for Principal Component Analysis (PCA), performed by the commercial software, Statgraphics XV. A two-dimensional plot of the first two principal components (PCs) is represented in Figure 6, where a clear separation of the 11 solvents is observed. The ability to distinguish and identify solvents not only proves the concept of the opto-electrical nose, but also shows its efficiency using only three optical sensors.

Hybrid sensors were also used in which an area of the sensitive film was deposited on interdigitated electrodes. Thus it was possible to simultaneously acquire optical and electrical responses from a single sensor, as exemplified in Figure 7, as proof of concept for the opto-electronic system.

**EXAMPLE 5** - **Application of a sensitive film**

In order to monitor the quality of fresh fish, using a gas sensor, a system was built consisting of two closed compartments, separated by a door controlled by computer. This system allowed to alternate periods of exposure (to the volatiles from the fish sample and recovery, in fresh air, of the sensor, monitoring the emission of volatile compounds over extended periods of time. In the upper compartment an optical sensor formed by biopolymer (gelatin), liquid crystal (5CB) and ionic liquid ([BMIM][Cl]) was introduced, and in the lower compartment fresh fish (Tilapia) was placed for sensory analysis, using a sensor gas. Under the same conditions, eight pieces of Tilapia, weighing 25 g each, were placed in a vessel for periodic microbiological analysis. Both tests - gas sensor and bench microbiological testing - aimed to assess the quality of the fish over time as tools for food safety analysis. The gas sensor is able to quantify volatile compounds emitted during the fish deterioration process while the microbiological tests count the colony forming units (CFUs), being this last test a validation of the first.

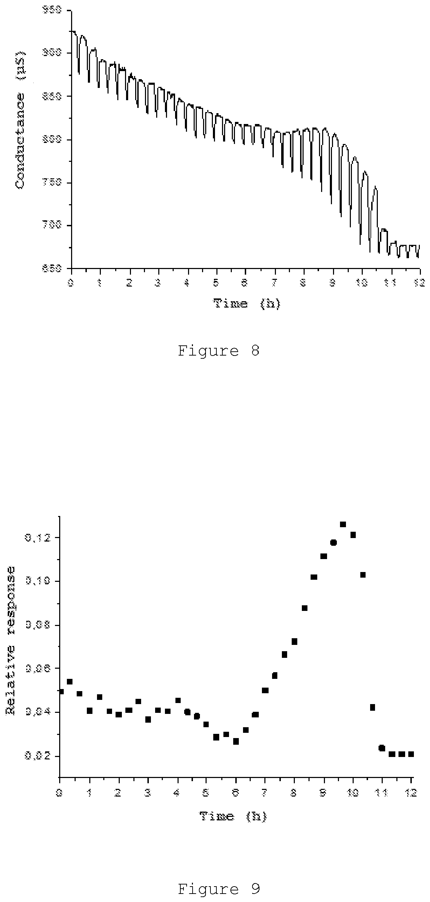

The relative response of the sensor was calculated as the ratio of the difference between the maximum and minimum conductance and maximum conductance. Figures 8 and 9 are graphical representations of the conductance and relative response, respectively, obtained over time. The plot shows an abrupt increase in the relative response of the sensor at about 7h after start of the test, reaching a peak at 10h. From 10h onwards, the sensor gradually loses its responsiveness until it reaches a saturation phase. Around 6 h after the beginning of the test, a slight decrease is observed in the sensor response, which is consistent with the results of microbiological count assay performed simultaneously. The above assay was accompanied by conventional microbiological bench testing methods used to evaluate the quality of fish. The microbiological tests were carried out simultaneously, at every 2h throughout the assay. Tilapia fish samples were subjected to enumeration of mesophilic bacteria, following the method of APHA, 2001. In this analysis, 25g samples in 25 mL of peptone water were subjected to serial dilutions (1:10) until the fifth dilution, and subsequently inoculated into duplicate plates in standard agar culture medium for counting. The plates were incubated in inverted position at 37°C for 48h. The results of the total count of mesophilic bacteria show that, similarly to what was detected by the gas sensor, there was a decrease in bacterial count at 6h of the assay and a significant increase at 8h. This fact suggests that two bacterial strains may be present competing for the substrate, being the first strain better adapted to the environment and dominating in the first stage of the assay. From the 6 h on, a second strain develops and kills the first strain, this way initiating an exponential growth from that moment. At 8h a count of $5 \times 10^6$/g was obtained for mesophilic bacteria.

The information obtained by microbiological analysis is strictly coherent with the data obtained by the sensor during the test, where the increased sensor response can be associated with an increase in bacterial population in the fish. It is noteworthy that a single optical sensor was efficient in monitoring perishable products, giving information on the quality of the fish. This sensor can potentially be used to monitor perishable products such as fish, which are exposed in supermarkets, open street markets, fish shops etc., informing suppliers and customers on the quality of the sold products.

**EXAMPLE 6** - **Application of the sensitive film**

In view of concerns about automotive gas emissions and increasing efforts towards the use of renewable fuels, the automotive industry has created flex-fuel vehicles, available in several countries, such as Brazil. Flex-fuel vehicles accept ethanol-gasoline blends in any proportion, varying from pure ethanol to pure gasoline. It is crutial to measure the composition of the fuel in the vehicle's tank and convey it to the engine because the ideal air:fuel ratio that enters the combustion chamber depends on the composition of the fuel and is essential for the proper operation of the engine. Currently, manufacturers use oxygen sensors, called lambda sensors, positioned in the exhaust manifold to measure combustion quality and regulate the air:fuel proportion, regardless of the real composition of the fuel that is being burnt. Blending ethanol with gasoline in Brazil is allowed up to a maximum of 25% of ethanol. Control of this content is necessary in view of the occurrence of several cases of tampering, in which up to 50% ethanol content was found in market fuels.

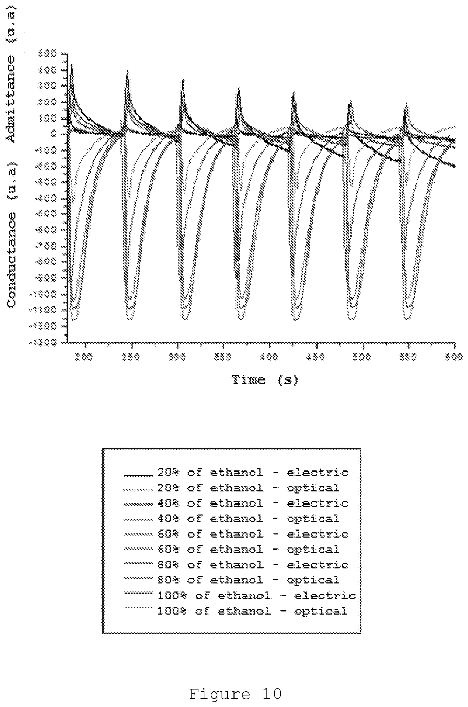

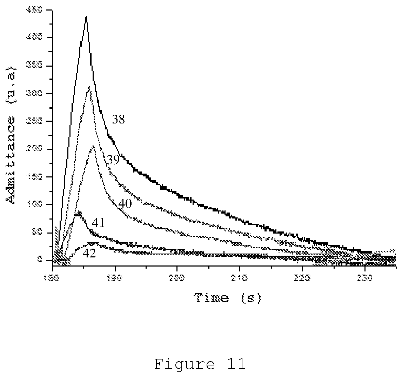

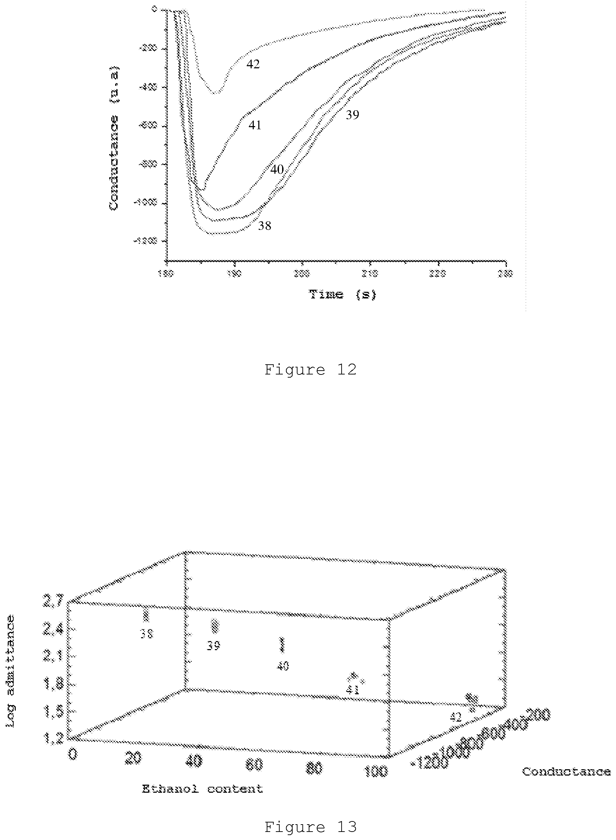

In order to quantify ethanol in gasoline, the opto-electrical (hybrid) sensors now described were exposed to fuel samples containing different concentrations of ethanol ranging from 0% (pure gasoline) to 100% (pure ethanol). The hybrid sensor comprises of a sensitive film composed of a mixture of liquid crystal and ionic liquid encapsulated in a biopolymer matrix of gelatin which was deposited by spin coating over gold interdigitated electrodes on a transparent glass substrate. The ionic liquid used in this sensor is [BMIM] [FeCl$_4$] and the liquid crystal is 5CB. The volatiles were led from the sample chamber to the sensor by means of a volatile delivery system as depicted in Figure 3. The sample was heated for 10 min and thermostatted at 35°C and, then the sensor was exposed for 5 s to the headspace of the sample followed by 55 s exposure to fresh dry air, at a flow rate of 1.7 L/min. Admittance and conductance readings (20 readings per second) were performed simultaneously and are shown in Figure 10. Each component of the hybrid sensor produces a different response according to the content of ethanol in the corresponding fuel sample. The electric response, illustrated in Figure 11 shows that the admittance increases when the sensor is exposed to the volatiles and that this increase is inversely proportional to the level of ethanol in the fuel. In the optical response, as illustrated in Figure 12, the exposure to volatiles resulted in a decrease of conductance, whose variation is also inversely proportional to the level of ethanol in the mixture. The observed reduction in optical response variation in the presence of ethanol is in accordance with the previous trials where several organic solvents were tested. Ethanol was the solvent that had lower effect on liquid crystal micelles, this way leading to a lower variation on the obstruction of light path and resulting in a lower conductance variation. Admittance and conductance variation were estimated from the height of the respective signal peaks. The results were fitted to a multiple linear regression model, to describe the relation between the content of ethanol and the two variables, conductance and admittance, as illustrated in Figure 13. The equation of the fitted model is:

Ethanol content = 21163 - 0,0466744 * conductance - 92,5484 * Log(admitance)

Since the P-value is lower than 0.05, there is a statistically significant relation between the variables within a 95% level of confidence. The R-squared value indicates that the model explains 94.2% of the variability of ethanol content.

A single sensitive film is enough to quantify the content of ethanol in a gasoline sample since both the optical and the electrical components respond proportionally to the amount of ethanol in the sample, in an independent manner. However, since gasoline is a complex mixture susceptible to fluctuations in the composition, a double-variable model with two independent variables resulting from distinct transduction principles was employed. The combination of the two types of response in the same sensor and in a same model aims to lower the influence of that variable on the model. The opto-electrical (hybrid) sensor shows, through this application, its usefulness and practicality in the quantification of ethanol content in gasoline, which can be detected immediately when filling the vehicle's fuel tank or in petrol stations.

**References**

[1] Hussain, A., Pina, A.S., & Roque, A.C.A. (2009). Bio-recognition and detection using liquid crystals. Biosensors & Bioelectronics, 25(1), 1-8. doi:10.1016/j.bios.2009.04.038

[2] Kim, B. S., & Abbott, N. L. (2001). Rubbed Films of Functionalized Bovine Serum Albumin as Substrates for the Imaging of Protein-Receptor Interactions Using Liquid Crystals. Advanced Materials, 13(19), 1445-1449.

[3] Jang, C., Tingey, M. L., Korpi, N. L., Wiepz, G. J., Schiller, J. H., Bertics, P. J., & Abbott, N. L. (2005). Using Liquid Crystals to Report Membrane Proteins Captured by Affinity Microcontact Printing from Cell Lysates and Membrane Extracts, 8912-8913.

[4] Helfinstine, S. L., Lavrentovich, O. D., & Woolverton, C. J. (2006). Lyotropic liquid crystal as a real-time detector of microbial immune complexes. Letters in applied microbiology, 43(1), 27-32. doi:10.1111/j.1472-765X.2006.01916.x

[5] Shiyanovskii, S. V., Lavrentovich, O. D., Schneider, T., Ishikawa, T., Smalyukh, I. I., Woolverton, C. J., ... Doane, K. J. (2005). Lyotropic Chromonic Liquid Crystals for Biological Sensing Applications. Molecular Crystals and Liquid Crystals, 434(1), 259/[587]-270/[598]. doi:10.1080/15421400590957288

[6] Tjipto, E., Cadwell, K. D., Quinn, J. F., Johnston, A. P. R., Abbott, N. L., & Caruso, F. (2006). Tailoring the Interfaces between Nematic Liquid Crystal Emulsions and Aqueous Phases via Layer-by-Layer Assembly. Nanoletters, 6(10), 2243-2248.

[7] Miller, D. S., & Abbott, N. L. (2013). Influence of droplet size, pH and ionic strength on endotoxin-triggered ordering transitions in liquid crystalline droplets. Soft Matter, 9(2), 374. doi:10.1039/c2sm26811f

[8] Gupta, J. K., Tjipto, E., Zelikin, A. N., Caruso, F., & Abbott, N. L. (2008). Characterization of the growth of polyelectrolyte multilayers formed at interfaces between aqueous phases and thermotropic liquid crystals. Langmuir: the ACS journal of surfaces and colloids, 24(10), 5534-42. doi:10.1021/la800013f

[9] Sivakumar, S., Gupta, J. K., Abbott, N. L., & Caruso, F. (2008). Monodisperse Emulsions through Templating Polyelectrolyte Multilayer Capsules. Chemistry of Materials, 20(12), 7743-7745.

[10] Sivakumar, S., Wark, K. L., Gupta, J. K., Abbott, N. L., & Caruso, F. (2009). Liquid Crystal Emulsions as the Basis of Biological Sensors for the Optical Detection of Bacteria and Viruses. Advanced Functional Materials, 19(14), 2260-2265. doi:10.1002/adfm.200900399

[11] Aliño, V. J., Sim, P. H., Choy, W. T., Fraser, A., & Yang, K.-L. (2012). Detecting proteins in microfluidic channels decorated with liquid crystal sensing dots. Langmuir: the ACS journal of surfaces and colloids, 28(50), 17571-7. doi:10.1021/la303213h

[12] Bera, T., & Fang, J. (2013). Optical detection of lithocholic acid with liquid crystal emulsions. Langmuir: the ACS journal of surfaces and colloids, 29(1), 387-92. doi:10.1021/la303771t

[13] Ding, X., & Yang, K.-L. (2012). Liquid crystal based optical sensor for detection of vaporous butylamine in air. Sensors and Actuators B: Chemical, 173, 607-613. doi:10.1016/j.snb.2012.07.067

[14] Sen, A., Kupcho, K.A., Grinwald, B.A., Vantreeck, H.J., Acharya, B.R. (2013). Liquid crystal-based sensors for selective and quantitative detection of nitrogen dioxide. Sensors and Actuators B: Chemical, 178, 222- 227.

[15] Ho, W.F., Chan, H.P., Yang, K.L. (2013). Planar Optical Waveguide Platform for Gas Sensing Using Liquid Crystal. IEEE Sensors Journal, 13, 2521.

[16] Mujahid, A., Stathopulos, H., Lieberzeit, P.A., Dickert, F.L. (2010). Solvent Vapour Detection with Cholesteric Liquid Crystals-Optical and Mass-Sensitive Evaluation of the Sensor Mechanism. Sensors, 10, 4887-4897; doi:10.3390/s100504887.

[17] US20120288951- DETECTION OF VAPOR PHASE COMPOUNDS BY CHANGES IN PHYSICAL PROPERTIES OF A LIQUID CRYSTAL

[18] US7666661- Substrates, devices, and methods for quantitative liquid crystal assays

[19] Lai, Y.-T., Kuo, J.-C., Yang, Y.-J. (2013). Polymer-dispersed liquid crystal doped with carbon nanotubes for dimethyl methylphosphonate vapor-sensing application. Applied Physics Letters 102, 191912.

[20] P. VIDINHA, P. VIDINHA, N. M. T. LOURENÇO e N. M. T. LOURENÇO, "Sintese e aplicação de uma familia de novos materiais resultantes do cruzamento quimico entre gelatina e sais orgânicos". Portugal Patente PI103765, 20 Junho 2007.

[21] Carvalho, T., Vidinha, P., Vieira, B.R., Li, R.W.C., Gruber, J. (2014) Ion Jelly: a novel sensing material for gas sensors and electronic noses. Journal of Materials Chemistry C; doi: 10.1039/C3TC31496K

**Claims**

1. A composite material formulation comprising

   at least one liquid crystal, composed of at least one mesogen, wherein the liquid crystal is 4-pentyl-4'-cyanobiphenyl;
   at least one ionic liquid, composed by at least one organic salt of composition X+ and Y-, where X+ represents cation of the salt and Y- represents the anion of the salt, wherein the ionic liquid is [BMIM][Cl], [BMIM][DCA] or [BMIM][FeCl$_4$]; at least one polymer, wherein the polymer is dextran or gelatin;
   and at least one solvent;
   provided that when the polymer is dextran the ionic liquid is LBMIM][Cl].

**2.** The composite material formulation according to claim 1, wherein the solvent is at least one polar, apolar, protic, aprotic, ionically charged or uncharged solvent.

**3.** The composite material formulation according to any of the previous claims, wherein the formulation of the mixture comprises at least one stabilizing agent, wherein the stabilizing agent is sorbitol.

**4.** The composite material formulation according to any of the previous claims, wherein the formulation of the mixture comprises at least one electrolyte.

**5.** The composite material according to any of the previous claims, wherein the formulation of the mixture comprises at least one biomolecule recognizing agent selected from peptides, antibodies and enzymes.

**6.** The composite material formulation according to claim 1 and claim 2, wherein the formulation of the mixture comprises carbon nanotubes, gold nanoparticles and/or magnetic nanoparticles.

**7.** The composite material formulation according to claims 1 and 2, wherein the formulation encapsulates active ingredients, wherein the active ingredients are biomolecules and cells.

**8.** A method of production of sensitive film of the composite material formulation described in any of the previous claims, comprising the following steps:

- formulation of a composite material comprising at least one liquid crystal wherein the liquid crystal is 4-pentyl-4'-cyanobiphenyl, at least one ionic liquid wherein the ionic liquid is [BMIM][Cl], [BMIM][DCA] or [BMIM][FeCl$_4$], at least one polymer, wherein the polymer is dextran or gelatin and at least one solvent; provided that when the polymer is dextran the ionic liquid is [BMIM][Cl];
- modeling the formulation in the layer format, as being, a thin transparent film through the spreading of the previous formulation over a non-treated rigid or flexible surface, optionally optically transparent, which cannot exhibit any own anisotropy, through applying spreading techniques, such as, the use of utensils like spikes, glass rod or any mechanical or automatic propulsion technique.

**9.** The method according to the previous claim, wherein the formulation of the mixture is prepared through a procedure selected from magnetic stirring, manual shaking, vortexing or applying ultrasound.

**10.** The method according to claim 8, wherein the rigid or flexible surface comprises at least one structure selected from mesh, channel, plurality of collumns, a matrix of test area, or a combination thereof.

**11.** A use of the sensitive composite material formulation described in any of the claims 1 to 7, wherein it is used as sensitive film that respond to external stimuli selected from temperature changes, pressure changes, changes of concentration of compounds such as patterns of analytes and analytes, organic compounds, inorganic compounds, biomolecules, biomarkers, microorganisms, viruses, cells, organelles, and particles, in gaseous, liquid or solid states, by observing or measuring changes in the properties of the composite material formulation, such as changes to the optical, electrical and opto-electrical properties.

**12.** The use of the sensitive composite material formulation described in any of the claims 1 to 7, wherein it is used to encapsulate active ingredients, molecules and particles such as biomolecules and cells.

**13.** The use of the sensitive composite material formulation described in any of the claims 1 to 7, wherein it is used as material for diagnosis and therapy medical devices, as materials and devices for the pharmaceutical and cosmetics industries, for the development of materials and devices for the construction and automobile industries, materials for catalysis of chemical and biochemical reactions, materials for compound separation, conducting and semiconducting materials, electrochemical cells or parts of electrochemical cells.

**Patentansprüche**

**1.** Eine Verbundstoffformulierung, umfassend

mindestens einen Flüssigkristall, zusammengesetzt aus mindestens einem Mesogen, wobei der Flüssigkristall 4-Pentyl-4'-Cyanobiphenyl ist;

mindestens eine ionische Flüssigkeit, zusammengesetzt aus mindestens einem organischen Salz der Zusammensetzung X+ und Y-, wobei X+ ein Kation des Salzes und Y-das Anion des Salzes darstellt, wobei die ionische Flüssigkeit [BMIM][Cl], [BMIM][DCA] oder [BMIM][FeCl$_4$] ist;

mindestens ein Polymer, wobei das Polymer Dextran oder Gelatine ist;

und mindestens ein Lösungsmittel;

vorausgesetzt, dass die ionische Flüssigkeit [BMIM][Cl] ist, falls das Polymer Dextran ist.

2. Die Verbundstoffformulierung nach Anspruch 1, wobei das Lösungsmittel mindestens ein polares, unpolares, protisches, aprotisches, ionisch geladenes oder ungeladenes Lösungsmittel ist.

3. Die Verbundstoffformulierung nach einem der vorangehenden Ansprüche, wobei die Formulierung der Mischung mindestens einen Stabilisator umfasst, wobei der Stabilisator Sorbit ist.

4. Die Verbundstoffformulierung nach einem der vorangehenden Ansprüche, wobei die Formulierung der Mischung mindestens einen Elektrolyten umfasst.

5. Der Verbundstoff nach einem der vorangehenden Ansprüche, wobei die Formulierung der Mischung mindestens ein Biomolekül als Erkennungsmittel umfasst, ausgewählt aus Peptiden, Antikörpern und Enzymen.

6. Die Verbundstoffformulierung nach Anspruch 1 und 2, wobei die Formulierung der Mischung Kohlenstoffnanoröhren, Nanopartikel aus Gold und/oder magnetische Nanopartikel umfasst.

7. Die Verbundstoffformulierung nach Anspruch 1 und 2, wobei die Formulierung Wirkstoffe einkapselt, wobei die Wirkstoffe Biomoleküle und Zellen sind.

8. Ein Verfahren zur Herstellung einer empfindlichen Folie aus der Verbundstoffformulierung nach einem der vorangehenden Ansprüche, umfassend die folgenden Schritte:

   - Formulierung eines Verbundstoffs, umfassend mindestens einen Flüssigkristall, wobei der Flüssigkristall 4-Pentyl-4'-Cyanobiphenyl ist, mindestens eine ionische Flüssigkeit, wobei die ionische Flüssigkeit [BMIM][Cl], [BMIM][DCA] oder [BMIM][FeCl$_4$] ist, mindestens ein Polymer, wobei das Polymer Dextran oder Gelatine ist, und mindestens ein Lösungsmittel; vorausgesetzt, dass die ionische Flüssigkeit [BMIM][Cl] ist, falls das Polymer Dextran ist;
   - Modellierung der Formulierung im Schichtformat als eine dünne, transparente Folie durch Verteilen der vorangehenden Formulierung auf einer unbehandelten starren oder flexiblen, optional optisch transparenten Oberfläche, die keine eigene Anisotropie aufweisen darf, durch Einsatz von Auftragsverfahren, wie z. B. die Verwendung von Geräten wie Stiften, Glasstab oder einer mechanischen oder automatischen Antriebstechnik.

9. Das Verfahren nach dem vorangehenden Anspruch, wobei die Formulierung der Mischung über ein Verfahren hergestellt wird, ausgewählt aus magnetischem Rühren, manuellem Schütteln, Verwirbeln oder dem Einsatz von Ultraschall.

10. Das Verfahren nach Anspruch 8, wobei die starre oder flexible Oberfläche mindestens eine Struktur umfasst, ausgewählt aus einem Netz, einem Kanal, einer Vielzahl von Spalten, einer Matrix einer Testfläche oder einer Kombination hiervon.

11. Eine Verwendung der in einem der Ansprüche 1 bis 7 beschriebenen empfindlichen Verbundstoffformulierung, wobei diese als empfindliche Folie verwendet wird, die auf externe Stimuli reagiert, ausgewählt aus Temperaturänderungen, Druckänderungen, Konzentrationsänderungen von Verbindungen wie z. B. Proben von Analyten und Analyten, organischen Verbindungen, anorganischen Verbindungen, Biomolekülen, Biomarkern, Mikroorganismen, Viren, Zellen, Organellen und Partikeln in gasförmigem, flüssigem oder festem Zustand, durch Beobachten oder Messen von Veränderungen der Eigenschaften der Verbundstoffformulierung, wie z. B. Veränderungen der optischen, elektrischen und optoelektronischen Eigenschaften.

12. Die Verwendung der in einem der Ansprüche 1 bis 7 beschriebenen empfindlichen Verbundstoffformulierung, wobei diese zur Einkapselung von Wirkstoffen, Molekülen und Partikeln wie Biomolekülen und Zellen verwendet wird.

**13.** Die Verwendung der in einem der Ansprüche 1 bis 7 beschriebenen empfindlichen Verbundstoffformulierung, wobei diese als Material für medizinische Geräte für die Diagnose und die Therapie, als Materialien und Geräte für die pharmazeutische und kosmetische Industrie, für die Entwicklung von Materialien und Geräten für die Bau- und Automobilindustrie, als Materialien für die Katalyse chemischer und biochemischer Reaktionen, als Materialien für die Trennung von Verbindungen, als leitende und halbleitende Materialien, als elektrochemische Zellen oder als Teile elektrochemischer Zellen verwendet wird.

**Revendications**

**1.** Une formulation de matériau composite comprenant

au moins un cristal liquide, composé d'au moins un mésogène, dans lequel le cristal liquide est du 4-pentyle-4'-cyanobiphényle ;
au moins un liquide ionique, composé d'au moins un sel organique de composition X+ et Y-, où X+ représente le cation du sel et Y- représente l'anion du sel, dans lequel le liquide ionique est [BMIM][Cl], [BMIM][DCA] ou [BMIM][FeCl$_4$] ;
au moins un polymère, dans lequel le polymère est du dextran ou de la gélatine ;
et au moins un solvant ;
à condition que lorsque le polymère est du dextran le liquide ionique soit [BMIM][Cl].

**2.** La formulation de matériau composite selon la revendication 1, dans laquelle le solvant est au moins un solvant polaire, apolaire, protique, aprotique, ioniquement positif ou négatif.

**3.** La formulation de matériau composite selon l'une quelconque des revendications précédentes, dans laquelle la formulation du mélange comprend au moins un agent stabilisateur, dans lequel l'agent stabilisateur est le sorbitol.

**4.** La formulation de matériau composite selon l'une quelconque des revendications précédentes, dans laquelle la formulation du mélange comprend au moins un électrolyte.

**5.** Le matériau composite selon l'une quelconque des revendications précédentes, dans lequel la formulation du mélange comprend au moins un agent de reconnaissance de biomolécule sélectionné à partir de peptides, anticorps et enzymes.

**6.** La formulation de matériau composite selon la revendication 1 et la revendication 2, dans laquelle la formulation du mélange comprend des nanotubes de carbone, des nanoparticules d'or et/ou des nanoparticules magnétiques.

**7.** La formulation du matériau composite selon les revendications 1 et 2, dans laquelle la formulation encapsule des ingrédients actifs, dans laquelle les ingrédients actifs sont des biomolécules et cellules.

**8.** Un procédé de production de film sensible de la formulation de matériau composite décrite dans l'une quelconque des revendications précédentes, comprenant les étapes suivantes :

- formulation d'un matériau composite comprenant au moins un cristal liquide dans laquelle le cristal liquide est du 4-pentyle-4'-cyanobiphényle, au moins un liquide ionique dans lequel le liquide ionique est du [BMIM][Cl], du [BMIM][DCA] ou du [BMIM][FeCl$_4$], au moins un polymère, dans lequel le polymère est du dextran ou de la gélatine et au moins un solvant ; à condition que lorsque le polymère est du dextran le liquide ionique soit du [BMIM][Cl] ;
- modélisation de la formulation dans le format de la couche, comme étant un film transparent fin à travers l'étalement de la formulation précédente sur une surface non traitée rigide ou flexible, optionnellement optiquement transparente, qui ne peut exiber aucune anisotropie propre, à travers l'application de techniques d'étalement, telles que l'utilisation d'ustensiles tels que des pics, une tige de verre ou toute technique de propulsion mécanique ou automatique.

**9.** Le procédé selon la revendication précédente, dans lequel la formulation du mélange est préparée à travers une procédure sélectionnée à partir d'agitation magnétique, sécouage manuel, création de vortex ou application d'ultrason.

**10.** Le procédé selon la revendication 8, dans lequel la surface rigide ou flexible comprend au moins une structure séléctionnée à partir de maillage, canal, pluralité de colonnes, une matrice de zone de test, ou une combinaison de ceux-ci.

**11.** Une utilisation de la formulation de matériau composite sensible décrite dans l'une quelconque des revendications 1 à 7, dans laquelle elle est utilisée comme film sensible qui répond à des stimulis externes sélectionnés à partir de changements de température, changements de pression, chagements de concentration de composés tels que des motifs d'analytes et analytes, composés organiques, composés inorganiques, biomolécules, biomarqueurs, microorganismes, virus, cellules, organelles, et particules, aux états gazeux, liquide ou solide, en observant ou mesurant des changements dans les propriétés de la formulation du matérieu composite, tels que les changements des propriétés optiques, électriques et opto-électriques.

**12.** L'utilisation de la formulation de matériau composite décrite dans l'une quelconque des revendications 1 à 7, dans laquelle elle est utilisé pour encapsuler des ingrédients actifs, mollécules et particules tels que des biomollécules et cellules.

**13.** L'utilisation de la formulation de matériau composite décrite dans l'une quelconque des revendications 1 à 7, dans laquelle elle est utilisé comme matérieu pour des dispositifs de diagnostic et thérapie médicale, tels que des matériaux et dispositifs pour les industries pharmaceutiques et cosmétiques, pour le développement de matérieux et dispositifs pour les industries de la construction et de l'automobile, matériaux pour la catalyse de réactions chimiques et biochimiques, matériaux pour la séparation de composés, matériaux conducteurs et semi-conducteurs, cellules electrochimiques ou parts de cellules électrochimiques.

Figure 1

Figure 2

Figure 3

Figure 4

Figure 5

Figure 6

Figure 7

Figure 8

Figure 9

Figure 10

Figure 11

Figure 12

Figure 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120288951 A
- US 7666661 B
- PT 103765
- US 2003194753 A
- US 2004169158 A
- WO 2010060131 A
- PT PI103765

### Non-patent literature cited in the description

- **MASAFUMI YOSHIO et al.** *Self-assembly of an ionic liquid and a hydroxyl-terminated liquid crystal: Anisotropic ion conduction in layered nanostructures*
- **WEI et al.** *Applications of ionic liquids in electrochemical sensors*
- **SIVAKUMAR et al.** *Liquid crystal emulsions as the basis of biological sensors for the optical detection of bacteria and viruses*
- **JUNICHI SATO et al.** *Chiroptical properties of cholesteric liquid crystals of chitosan phenylcarbamate in ionic liquids*
- **HUSSAIN, A. ; PINA, A.S. ; ROQUE, A.C.A.** Bio-recognition and detection using liquid crystals. *Biosensors & Bioelectronics,* 2009, vol. 25 (1), 1-8
- **KIM, B. S. ; ABBOTT, N. L.** Rubbed Films of Functionalized Bovine Serum Albumin as Substrates for the Imaging of Protein-Receptor Interactions Using Liquid Crystals. *Advanced Materials,* 2001, vol. 13 (19), 1445-1449
- **JANG, C. ; TINGEY, M. L. ; KORPI, N. L. ; WIEPZ, G. J. ; SCHILLER, J. H. ; BERTICS, P. J. ; ABBOTT, N. L.** *Using Liquid Crystals to Report Membrane Proteins Captured by Affinity Microcontact Printing from Cell Lysates and Membrane Extracts,* 2005, 8912-8913
- **HELFINSTINE, S. L. ; LAVRENTOVICH, O. D. ; WOOLVERTON, C. J.** Lyotropic liquid crystal as a real-time detector of microbial immune complexes. *Letters in applied microbiology,* 2006, vol. 43 (1), 27-32
- **SHIYANOVSKII, S. V. ; LAVRENTOVICH, O. D. ; SCHNEIDER, T. ; ISHIKAWA, T. ; SMALYUKH, I. I. ; WOOLVERTON, C. J. ; DOANE, K. J.** Lyotropic Chromonic Liquid Crystals for Biological Sensing Applications. *Molecular Crystals and Liquid Crystals,* 2005, vol. 434 (1
- **TJIPTO, E. ; CADWELL, K. D. ; QUINN, J. F. ; JOHNSTON, A. P. R. ; ABBOTT, N. L. ; CARUSO, F.** Tailoring the Interfaces between Nematic Liquid Crystal Emulsions and Aqueous Phases via Layer-by-Layer Assembly. *Nanoletters,* 2006, vol. 6 (10), 2243-2248
- **MILLER, D. S. ; ABBOTT, N. L.** Influence of droplet size, pH and ionic strength on endotoxin-triggered ordering transitions in liquid crystalline droplets. *Soft Matter,* 2013, vol. 9 (2), 374
- **GUPTA, J. K. ; TJIPTO, E. ; ZELIKIN, A. N. ; CARUSO, F. ; ABBOTT, N. L.** Characterization of the growth of polyelectrolyte multilayers formed at interfaces between aqueous phases and thermotropic liquid crystals. *Langmuir: the ACS journal of surfaces and colloids,* 2008, vol. 24 (10), 5534-42
- **SIVAKUMAR, S. ; GUPTA, J. K. ; ABBOTT, N. L. ; CARUSO, F.** Monodisperse Emulsions through Templating Polyelectrolyte Multilayer Capsules. *Chemistry of Materials,* 2008, vol. 20 (12), 7743-7745
- **SIVAKUMAR, S. ; WARK, K. L. ; GUPTA ; J. K., ABBOTT ; N. L. ; CARUSO, F.** Liquid Crystal Emulsions as the Basis of Biological Sensors for the Optical Detection of Bacteria and Viruses. *Advanced Functional Materials,* 2009, vol. 19 (14), 2260-2265
- **ALIÑO, V. J. ; SIM, P. H. ; CHOY, W. T. ; FRASER, A. ; YANG, K.-L.** Detecting proteins in microfluidic channels decorated with liquid crystal sensing dots. *Langmuir: the ACS journal of surfaces and colloids,* 2012, vol. 28 (50), 17571-7
- **BERA, T. ; FANG, J.** Optical detection of lithocholic acid with liquid crystal emulsions. *Langmuir: the ACS journal of surfaces and colloids,* 2013, vol. 29 (1), 387-92
- **DING, X. ; YANG, K.-L.** Liquid crystal based optical sensor for detection of vaporous butylamine in air. *Sensors and Actuators B: Chemical,* 2012, vol. 173, 607-613

- **SEN, A. ; KUPCHO, K.A. ; GRINWALD, B.A. ; VANTREECK, H.J. ; ACHARYA, B.R.** Liquid crystal-based sensors for selective and quantitative detection of nitrogen dioxide. *Sensors and Actuators B: Chemical,* 2013, vol. 178, 222-227
- **HO, W.F. ; CHAN, H.P. ; YANG, K.L.** Planar Optical Waveguide Platform for Gas Sensing Using Liquid Crystal. *IEEE Sensors Journal,* 2013, vol. 13, 2521
- **MUJAHID, A. ; STATHOPULOS, H. ; LIEBERZEIT, P.A. ; DICKERT, F.L.** Solvent Vapour Detection with Cholesteric Liquid Crystals-Optical and Mass-Sensitive Evaluation of the Sensor Mechanism. *Sensors,* 2010, vol. 10, 4887-4897
- **LAI, Y.-T ; KUO, J.-C. ; YANG, Y.-J.** Polymer-dispersed liquid crystal doped with carbon nanotubes for dimethyl methylphosphonate vapor-sensing application. *Applied Physics Letters,* 2013, vol. 102, 191912
- **CARVALHO, T. ; VIDINHA, P. ; VIEIRA, B.R. ; LI, R.W.C. ; GRUBER, J.** Ion Jelly: a novel sensing material for gas sensors and electronic noses. *Journal of Materials Chemistry C,* 2014